(19) Europäisches Patentamt
European Patent Office
Office européen des brevets

(11) EP 3 805 292 A1

(12) # EUROPEAN PATENT APPLICATION
published in accordance with Art. 153(4) EPC

(43) Date of publication:
**14.04.2021 Bulletin 2021/15**

(21) Application number: **19816061.6**

(22) Date of filing: **20.05.2019**

(51) Int Cl.:
***C08G 69/26*** *(2006.01)*

(86) International application number:
**PCT/JP2019/019936**

(87) International publication number:
**WO 2019/235201 (12.12.2019 Gazette 2019/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.06.2018 JP 2018108373**

(71) Applicant: **MITSUBISHI GAS CHEMICAL COMPANY, INC.**
**Chiyoda-ku**
**Tokyo 100-8324 (JP)**

(72) Inventors:
- **YAMANAKA Masaki**
**Hiratsuka-shi, Kanagawa 254-0016 (JP)**
- **ODA Takafumi**
**Hiratsuka-shi, Kanagawa 254-0016 (JP)**

(74) Representative: **Vossius & Partner**
**Patentanwälte Rechtsanwälte mbB**
**Siebertstrasse 3**
**81675 München (DE)**

(54) **POLYAMIDE RESIN, MOLDED ARTICLE, AND PRODUCTION METHOD FOR POLYAMIDE RESIN**

(57) Provided are a polyamide resin, a molded article, and a method for producing the polyamide resin that excels in an oxygen barrier property, exhibits a sufficiently low yellowing index, and suppresses the occurrence of fish eyes. The polyamide resin includes a structural unit derived from a diamine and structural unit derived from a dicarboxylic acid, 70 mol% or more of the structural unit derived from a diamine being derived from meta-xylylenediamine, of the structural unit derived from a dicarboxylic acid, from 30 to 70 mol% being derived from an $\alpha,\omega$-linear aliphatic dicarboxylic acid having from 4 to 20 carbons, and from 70 to 30 mol% being derived from isophthalic acid (provided that a total of the structural unit derived from a dicarboxylic acid does not exceed 100 mol%). The polyamide resin includes a phosphorus atom at a proportion from 50 to 150 ppm by mass, and a sodium atom at a proportion such that a molar ratio of the phosphorus atom to the sodium atom is from 1:1 to 1:2.

Selected Drawing: None

EP 3 805 292 A1

## Description

### Technical Field

The present invention relates to a polyamide resin, a molded article, and a method for producing a polyamide resin.

### Background Art

Polyamide resins synthesized from meta-xylylene diamine, adipic acid, and isophthalic acid are known (Patent Document 1). Patent Document 1 discloses that a film made of polyamide resins has excellent transparency with a low yellowness index, and proposes to use such a film as a food packaging material or the like.

### Citation List

#### Patent Documents

Patent Document 1: WO 2017/090556

### Summary of Invention

#### Technical Problem

As described above, polyamide resins synthesized from meta-xylylene diamine, adipic acid, and isophthalic acid exhibit excellent properties, although it has been found that improvements are desired with regards to the generation of fish eyes (FE) in a molded article. Fish eyes are tiny masses that occur in a molded article due to some of the resin components not blended with the surrounding material. When this occurs, the appearance of the molded article may be affected.

Thus, an object of the present invention is to provide a polyamide resin, a molded article, and a method for producing the polyamide resin that solves these problems, excels in an oxygen barrier property, exhibits a low yellowness index, and suppresses the occurrence of fish eyes.

#### Solution to Problem

As a result of a diligent examination conducted by the present inventors, the present inventors solved the-mentioned problems by the following <1>, and preferably by the following <2> to <9>.

<1> A polyamide resin including a structural unit derived from a diamine and a structural unit derived from a dicarboxylic acid, of the structural unit derived from a diamine, 70 mol% or more being derived from meta-xylylenediamine, and of the structural unit derived from a dicarboxylic acid, from 30 to 70 mol% being derived from an α,ω-linear aliphatic dicarboxylic acid having from 4 to 20 carbons, and from 70 to 30 mol% being derived from isophthalic acid (provided that a total of the structural unit derived from a dicarboxylic acid does not exceed 100 mol%), and the polyamide resin including a phosphorus atom at a proportion from 50 to 150 ppm by mass, and a sodium atom at a proportion such that a molar ratio of the phosphorus atom to the sodium atom being from 1:1 to 1:2.

<2> The polyamide resin according to <1>, wherein the phosphorus atom is derived from sodium hypophosphite.

<3> The polyamide resin according to <1> or <2>, wherein the α,ω-linear aliphatic dicarboxylic acid having from 4 to 20 carbons includes adipic acid.

<4> The polyamide resin according to any one of <1> to <3>, which has an oxygen transmission coefficient of 0.2 cc·mm/$m^2$·day·atm or less at a condition of 23°C and 60% relative humidity.

<5> The polyamide resin according to any one of <1> to <4>, wherein a molded article formed by molding into a thickness of 2 mm has a yellowness index (YI) of 10.0 or less.

<6> A polyamide resin including a structural unit derived from a diamine and a structural unit derived from a dicarboxylic acid, of the structural unit derived from a diamine, 70 mol% or more being derived from meta-xylylenediamine, of the structural unit derived from a dicarboxylic acid, from 30 to 70 mol% being derived from an α,ω-linear aliphatic dicarboxylic acid having from 4 to 20 carbons, and from 70 to 30 mol% being derived from isophthalic acid (provided that a total of the structural unit derived from a dicarboxylic acid does not exceed 100 mol%), a number of fish eyes being 600 or less, a molded article formed by molding into a thickness of 2 mm having a yellowness index (YI) of 6.5 or less, wherein the number of fish eyes described herein refers to a number of microscopic masses having a circle-equivalent diameter of 200 μm or more, contained per 1 $m^2$ of a film when the polyamide resin is formed into a 60 μm thick film.

<7> A molded article formed from a composition including the polyamide resin described in any one of <1> to <6>.

<8> A method for producing a polyamide resin described in any one of <1> to <6>, the method including subjecting a diamine and a dicarboxylic acids to polycondensation in the presence of a sodium-containing catalyst, 70 mol% or more of the diamine being meta-xylylenediamine, and of the dicarboxylic acid, from 30 to 70 mol% being an α,ω-linear aliphatic dicarboxylic acid having from 4 to 20 carbons, and from 70 to 30 mol% being isophthalic acid (provided that a total of the dicarboxylic acid does not exceed 100 mol%).

<9> A method for producing a polyamide resin, including subjecting a diamine and a dicarboxylic acid to polycondensation in the presence of sodium hypophosphite, 70 mol% or more of the diamine being meta-xylylenediamine, and of the dicarboxylic acid, from 30 to 70 mol% being an α,ω-linear aliphatic dicarboxylic acid having from 4 to 20 carbons, and from 70 to 30 mol% being isophthalic acid (provided that a total of the dicarboxylic acid does not exceed 100 mol%), and the polyamide resin including a phosphorus atom at a proportion from 50 to 150 ppm by mass.

Advantageous Effects of Invention

According to the present invention, a polyamide resin, a molded article and a method for producing the polyamide resin that excels in an oxygen barrier property, exhibits a minimal yellowness index, and suppresses the occurrence of fish eyes can be provided.

Description of Embodiments

The contents of the present invention will be described in detail below. Note that, in the present specification, "from... to..." is used to mean that the given numerical values are included as the lower limit value and the upper limit value, respectively.

A polyamide resin of the present invention includes a structural unit derived from a diamine and a structural unit derived from a dicarboxylic acid, 70 mol% or more of the structural unit derived from a diamine being derived from meta-xylylenediamine, of the structural unit derived from a dicarboxylic acid, from 30 to 70 mol% being derived from an α,ω-linear aliphatic dicarboxylic acid having from 4 to 20 carbons, and from 70 to 30 mol% being derived from isophthalic acid (provided that a total of the structural unit derived from a dicarboxylic acid does not exceed 100 mol%), and the polyamide resin including a phosphorus atom at a proportion from 50 to 150 ppm by mass, and a sodium atom at a proportion such that a molar ratio of the phosphorus atom to the sodium atom being from 1:1 to 1:2.

With such a configuration, the obtained polyamide resin excels in an oxygen barrier property, exhibits a low yellowness index, and suppresses the occurrence of fish eyes.

In the present invention, a structural unit derived from isophthalic acid is introduced as a structural unit derived from a dicarboxylic acid in a polyamide resin formed from a xylylenediamine and an α,ω-linear aliphatic dicarboxylic acid having from 4 to 20 carbons. When a sodium-containing catalyst is used to synthesize this sort of polyamide resin, it was thought that the transparency of the obtained polyamide resin would become inferior subsequent to an immersion treatment. However, as a result of an examination by the present inventors, it was found that, by adjusting an amount of the catalyst normally used in the synthesis of a polyamide resin, the decrease in transparency after an immersion treatment can be suppressed even when a sodium-containing catalyst is used. The present inventors also discovered that, by setting the molar ratio of phosphorus atoms to sodium atoms to a predetermined ratio, the occurrence of fish eyes can be suppressed while maintaining excellent oxygen barrier properties and a low yellowness index, thereby the present inventors completed the present invention.

The polyamide resin according to the present invention is typically an amorphous resin. By using an amorphous polyamide resin, transparency can be further improved. Note that "amorphous resin" refers to a resin having a crystal melting enthalpy ΔHm of not more than 5 J/g.

In the polyamide resin according to the present invention, 70 mol% or more, preferably 80 mol% or more, more preferably 90 mol% or more, even more preferably 95 mol% or more, and yet even more preferably 99 mol% or more of the structural unit derived from a diamine is derived from meta-xylylenediamine.

Examples of diamines (other diamines) besides meta-xylylenediamine include aromatic diamines such as para-xylylenediamine and para-phenylenediamine, and aliphatic diamines such as 1,3-bis(aminomethyl)cyclohexane, 1,4-bis(aminomethyl)cyclohexane, tetramethylene diamine, pentamethylene diamine, hexamethylene diamine, octamethylene diamine, and nonamethylene diamine. Of these diamines, one may be used alone, or two or more may also be used.

In a case where a diamine other than xylylenediamine is used as a diamine component, such a diamine is used at a proportion of preferably 30 mol% or less, more preferably from 1 to 25 mol%, and particularly preferably from 5 to 20 mol%, of the structural unit derived from a diamine.

Of all the dicarboxylic acids constituting the structural unit derived from a dicarboxylic acid in the polyamide resin according to the present invention, a lower limit of the proportion of isophthalic acid is preferably not less than 33 mol%, more preferably not less than 35 mol%, even more preferably not less than 38 mol%, and yet even more preferably not less than 40 mol%, and may be not less than 41 mol%. The upper limit of the proportion of the isophthalic acid is preferably not more than 67 mol%, more preferably not more than 65 mol%, even more preferably not more than 62 mol%, and yet even more preferably not more than 60 mol%. By setting the proportion of the isophthalic acid to be not less than 30 mol%, the resin can be an amorphous resin, and the transparency can be further improved.

Of all the dicarboxylic acids constituting the structural unit derived from a dicarboxylic acid in the polyamide resin according to the present invention, a lower limit of the proportion of $\alpha,\omega$-linear aliphatic dicarboxylic acids having from 4 to 20 carbons is preferably not less than 33 mol%, more preferably not less than 35 mol%, even more preferably not less than 38 mol%, and yet even more preferably not less than 40 mol%. The upper limit of the proportion of the $\alpha,\omega$-linear aliphatic dicarboxylic acids having from 4 to 20 carbons is preferably not more than 67 mol%, more preferably not more than 65 mol%, even more preferably not more than 62 mol%, and yet even more preferably not more than 60 mol%, and may be not more than 59 mol%. One type of an $\alpha,\omega$-linear aliphatic dicarboxylic acid having from 4 to 20 carbons may be used alone, or two or more types thereof may be used. Setting the proportion of $\alpha,\omega$-linear aliphatic dicarboxylic acids having from 4 to 20 carbons to 30 mol% or more facilitates the synthesis of the polyamide resin.

Examples of the $\alpha,\omega$-linear aliphatic dicarboxylic acid having from 4 to 20 carbons include aliphatic dicarboxylic acids such as succinic acid, glutaric acid, pimelic acid, suberic acid, azelaic acid, adipic acid, sebacic acid, undecanedioic acid, and dodecanedioic acid. Among these, adipic acid and sebacic acid are preferable, and adipic acid is more preferable.

Among all the dicarboxylic acids constituting the structural unit derived from a dicarboxylic acid in the polyamide resin according to the present invention, the total proportion of isophthalic acid and the $\alpha,\omega$-linear aliphatic dicarboxylic acid having from 4 to 20 carbons is preferably not less than 90 mol%, more preferably not less than 95 mol%, and even more preferably not less than 98 mol%, and may be 100 mol%. Setting the total proportion as set forth above tends to further improve the transparency of the molded article, further decreasing the yellowness index. In addition, the effect of suppressing fish eyes in the present invention is remarkable, and thus such a total proportion is preferable.

Examples of dicarboxylic acids besides isophthalic acid and the $\alpha,\omega$-linear aliphatic dicarboxylic acid having from 4 to 20 carbons include phthalic acid compounds, such as terephthalic acid and orthophthalic acid; and naphthalene dicarboxylic acid compounds such as 1,2-naphthalene dicarboxylic acid, 1,3-naphthalene dicarboxylic acid, 1,4-naphthalene dicarboxylic acid, 1,5-naphthalene dicarboxylic acid, 1,6-naphthalene dicarboxylic acid, 1,7-naphthalene dicarboxylic acid, 1,8-naphthalene dicarboxylic acid, 2,3-naphthalene dicarboxylic acid, 2,6-naphthalene dicarboxylic acid, and 2,7-naphthalene dicarboxylic acid. One type thereof can be used, or two or more types can be mixed and used.

The polyamide resin of the present invention is preferably substantially free of a structural unit derived from terephthalic acid. Substantially free means that the proportion of terephthalic acid contained in the polyamide resin is 5 mol% or less, preferably 3 mol% or less, and even more preferably 1 mol% or less, of the molar amount of isophthalic acid.

Note that the polyamide resin of the present invention is constituted from a structural unit derived from a dicarboxylic acid and a structural unit derived from a diamine, while it may also include a structural unit besides the structural unit derived from a dicarboxylic acid and the structural unit derived from a diamine, or other moieties such as terminal groups. Examples of other structural units include, but not limited to, a structural unit derived from lactams, such as $\varepsilon$-caprolactam, valerolactam, laurolactam, and undecalactam, and from aminocarboxylic acids, such as 11-aminoundecanoic acid and 12-aminododecanoic acid, and the like. Furthermore, the polyamide resin of the present invention may include trace amounts of components such as additives used for synthesis. Typically 95 mass% or more, and preferably 98 mass% or more of the polyamide resin of the present invention is a structural unit derived from a dicarboxylic acid or a structural unit derived from a diamine.

The polyamide resin of the present invention includes phosphorus atoms at a proportion from 50 to 150 ppm by mass, and includes sodium atoms at a proportion such that a molar ratio of phosphorus atoms to sodium atoms is from 1:1 to 1:2.

The lower limit of the phosphorus atom concentration in the polyamide resin of the present invention is preferably not less than 60 ppm by mass, more preferably not less than 70 ppm by mass, and even more preferably not less than 80 ppm by mass, and may be not less than 90 ppm by mass. The upper limit of the phosphorus atom concentration is preferably 140 ppm by mass or less, and more preferably 130 ppm by mass or less, and may be 120 ppm by mass or less, or 110 ppm by mass or less. Note that the concentration of phosphorus atoms is calculated on the basis of the mass ratio with respect to the polyamide resin, which is a polymer.

The molar ratio of phosphorus atoms to sodium atoms in the polyamide resin of the present invention is from 1:1 to 1:2, more preferably from 1:1 to 1:1.5, even more preferably from 1:1 to 1:1.2, and particularly preferably from 1:1 to 1:1.1.

The phosphorus atoms and sodium atoms included in the polyamide resin of the present invention are each preferably derived from sodium hypophosphite. When sodium hypophosphite is used, the molar ratio of phosphorus atoms to sodium atoms is usually 1:1. Note that the sodium atoms are preferably derived from a catalyst containing sodium, and are more preferably derived from sodium hypophosphite as described above. However, the present invention does not exclude aspects using other sodium-containing catalysts such as sodium acetate. One type of sodium-containing catalyst alone, or two or more types of sodium-containing catalysts may be used. An example of two or more types being used includes an aspect in which sodium hypophosphite and sodium acetate are used in combination.

In the present invention, it is important to set the concentration of phosphorus atoms and sodium atoms within the ranges described above. The phosphorus atoms and sodium atoms in the polyamide resin of the present invention are actually derived from a compound that is used as a polymerization catalyst in the synthesis of the polyamide resin. Specifically, the phosphorous atoms and sodium atoms are preferably derived from sodium hypophosphite. That is, the phosphorus atoms in the polyamide resin are generally derived from the catalyst during the synthesis of the resin, and therefore the concentration of phosphorus atoms and sodium atoms in the resin can be adjusted by increasing or decreasing the amount of catalyst during synthesis. By setting the concentration of phosphorus atoms in the polyamide resin synthesized from meta-xylylene diamine, adipic acid, and isophthalic acid to be within the ranges described above (by defining the amount of catalyst that is used during synthesis), and by setting the ratio of the phosphorus atoms to the sodium atoms to be within a specific range (by selecting the type of catalyst for use during synthesis, or by adjusting the amount of a sodium-containing compound that is commonly used), a high oxygen barrier property and a sufficiently low yellowness index can be maintained when the polyamide resin is formed into a molded article, resin dispersibility can be improved, and the suppression of fish eyes can be achieved at a high level when producing a product.

The polyamide resin of the present invention may contain calcium atoms, yet it is preferably substantially free of calcium atoms. Here, "substantially free" means that the amount of calcium atoms in the polyamide resin is 10 ppm by mass or less, and preferably 1 ppm by mass or less.

The method of measuring the concentrations of phosphorus atoms, sodium atoms, and calcium atoms is in accordance with a method described in the examples below. If the equipment employed in the examples is not readily available due to discontinuation of manufacture or the like, other equipment having the equivalent performance can be used. The same applies to the other measurement methods.

The lower limit of the number average molecular weight (Mn) of the polyamide resin of the present invention is preferably 6000 or more, more preferably 10000 or more, and may be 12000 or more. Furthermore, the upper limit of the number average molecular weight (Mn) is preferably 50000 or less, more preferably 30000 or less, and may be 25000 or less, 18000 or less, or 15000 or less.

When the polyamide resin of the present invention is heated to 300°C at a temperature increase rate of 10°C/minute, the heat quantity of the endothermic peak associated with melting is preferably less than 5 J/g based on a heat flux differential scanning calorimetry method. Resins in which the heat quantity of the endothermic peak associated with melting is less than 5 J/g are so-called amorphous resins. Such an amorphous resin also does not have a distinct melting point peak. The heat quantity of the endothermic peak and the melting point are measured in accordance with the method described in paragraph [0036] of WO 2017/090556.

In the polyamide resin according to the present invention, the number of fish eyes is preferably 600 or less, more preferably 550 or less, even more preferably 500 or less, and yet even more preferably 450 or less. The lower limit value is ideally 0 However, performance requirements will be sufficiently satisfied even when a number of fish eyes are 100 or more, 200 or more, or even 300 or more. The number of fish eyes refers to a number of microscopic masses having a circle-equivalent diameter of 200 μm or more contained per 1 $m^2$ of a film when the polyamide resin is formed into a 60 μm thick film. The number of fish eyes is measured in accordance with the method described in the examples below. In the present invention, the number of fish eyes can be reduced by preparing a polyamide resin such that phosphorus atoms are included at a proportion from 50 to 150 ppm by mass, and sodium atoms are included at a proportion such that the molar ratio of phosphorus atoms to sodium atoms is from 1:1 to 1:2.

The upper limit of the oxygen transmission coefficient (OTC) of the polyamide resin of the present invention at conditions of 23°C and 60% relative humidity is preferably 0.2 cc ·mm/$m^2$·day·atm or less, more preferably 0.15 cc·mm/$m^2$·day·atm or less, and even more preferably 0.1 cc·mm/$m^2$·day·atm or less. The lower limit of the OTC is preferably 0 cc·mm/$m^2$·day·atm, but is more practically a value of 0.03 cc·mm/$m^2$·day·atm or more, or even 0.05 cc ·mm/$m^2$·day·atm or more. The oxygen transmission coefficient in the present invention is measured in accordance with the method described in the examples below.

In the polyamide resin of the present invention, the yellowness index (YI) of a molded article molded to a thickness of 2 mm is preferably 10.0 or less, more preferably 9.0 or less, even more preferably 7.0 or less, yet even more preferably 6.5 or less, still even more preferably 6.0 or less, still even more preferably 5.0 or less, still even more preferably 4.5 or less, and particularly preferably 4.0 or less. The lower limit of the yellowness index (YI) is ideally 0, but a yellowness index of 2.5 or higher is a sufficiently practical value. In an embodiment of the present invention, a sodium-containing compound (preferably sodium hypophosphite) can be used as a polymerization catalyst, and therefore a lower YI can be achieved compared to when a calcium-containing compound (for example, calcium hypophosphite) is used as the catalyst. In the present invention, the yellowness index is measured in accordance with the method described in the examples below.

The polyamide resin of the present invention is more preferably transparent. Specifically, the haze of the polyamide resin of the present invention after immersing a molded article molded to a thickness of 2 mm in water at 23°C for 24 hours is preferably 10.0% or less, more preferably 8.0% or less, even more preferably 6.0% or less, yet even more preferably 4.0% or less, and still even more preferably 3.8% or less. In the present invention, the occurrence of fish eyes can be effectively suppressed while ensuring transparency in this manner, which is advantageous. The haze in the present invention is measured in accordance with the method described in paragraph [0032] of WO 2017/090556.

The polyamide resin of the present invention preferably simultaneously satisfies the aforementioned number of fish eyes and YI, and furthermore, more preferably satisfies at least one of the above-mentioned OTC value and the haze after immersion for 24 hours in 23°C water described above, and even more preferably satisfies both the OTC value and the haze after immersion for 24 hours in 23°C water described above. In the present invention, a low number of fish eyes and a low YI are both successfully achieved by appropriately selecting the raw material monomers and further configuring the polyamide resin to contain phosphorus atoms and sodium atoms at a predetermined ratio.

Method for Producing a Polyamide Resin

Next, an example of a method for producing the polyamide resin according to the present invention will be described. The polyamide resin of the present invention is preferably a polyamide resin produced by the method described below, yet the polyamide resin of the present invention is not limited thereto.

The method for producing a polyamide resin of the present invention includes subjecting diamines and dicarboxylic acids to polycondensation in the presence of a sodium-containing catalyst. Here, the diamines and dicarboxylic acids are synonymous with those described for the above-mentioned polyamide resin, and the preferred ranges are also the same. As discussed above, the present invention was achieved on the basis of knowledge that, in one embodiment of the present invention, a polyamide resin is synthesized by subjecting meta-xylylene diamine, adipic acid and isophthalic acid to polycondensation in the presence of a catalyst containing a certain amount of sodium, and thereby adjusting the concentrations of phosphorus atoms and sodium atoms, a high oxygen barrier property and a low yellowness index are maintained in a molded article produced using this resin, and fish eyes can be effectively suppressed. It was known in the art that a polyamide resin can be synthesized by subjecting the above-mentioned monomers to polycondensation in the presence of a sodium hypophosphite catalyst. However, the relationship between the amount of the catalyst and the properties of the resin or molded article thereof, and particularly, the causal relationship with the occurrence of fish eyes was not known.

Examples of the sodium-containing catalyst include sodium hypophosphite, sodium phosphite, sodium hydrogen phosphite, sodium ethylphosphonate, sodium phenylphosphonate, and sodium phenyl phosphonite, and sodium hypophosphite is preferable. Here, some or all of the sodium hypophosphite can be transformed to, for example, sodium phosphite, sodium phosphate, and sodium polyphosphate, etc. by oxidation during polycondensation or secondary processing. Furthermore, the ratio varies depending on the polycondensation conditions, the oxygen concentration during polycondensation. Therefore, there may be a case in which sodium hypophosphite is not present in the polyamide resin obtained by the method for producing the polyamide resin of the present invention.

The polycondensation is typically a melt polycondensation method, and is preferably conducted in a way of polymerizing where the raw material diamine is added drop-wise to the melted raw material dicarboxylic acid during the temperature increase under pressure while removing condensed water, or in a way of polymerizing in a melted state where a salt including the raw material diamine and the raw material dicarboxylic acid is heated under pressure in the presence of water while removing the added water and the condensed water.

In the present invention, a sodium-containing catalyst (preferably sodium hypophosphite) is preferably added at a ratio from 50 to 150 ppm by mass in terms of the phosphorus atom concentration with respect to the raw material monomers. In the present invention, the sodium-containing catalyst is added such that the phosphorus atom concentration in the polyamide resin becomes preferably 60 ppm by mass or higher, more preferably 70 ppm by mass or higher, and even more preferably 80 ppm by mass or higher or 90 ppm by mass or higher. As to the upper limit, the sodium-containing catalyst is added in an amount such that the phosphorus atom concentration becomes 140 ppm by mass or less, more preferably 130 ppm by mass or less, and even more preferably 120 ppm by mass and less or 110 ppm by mass or less.

Furthermore, in the production method of the present invention, the amount of sodium atoms that is added when synthesizing the polyamide resin is a proportion such that a molar ratio of phosphorus atoms to sodium atoms is preferably from 1:1 to 1:2, more preferably from 1:1 to 1:1.5, even more preferably from 1:1 to 1:1.2, and yet even more preferably from 1:1 to 1:1.1.

Furthermore, during polycondensation, other alkali metal compounds may be added in combination with the sodium hypophosphite. The addition of another alkali metal compound allows the amidation reaction rate to be controlled. Examples of other alkali metal compounds include sodium acetate. When another alkali metal compound is blended, the molar ratio of the other alkali metal compound to the sodium hypophosphite may be approximately from 0.5 to 2.0. However, the amount of sodium in the polyamide resin is preferably adjusted to be within the above-described ratio with respect to phosphorus atoms (molar ratio of phosphorus atoms to sodium atoms from 1:1 to 1:2), and more preferably, another alkali metal compound is substantially not contained. Here, substantially not contained means that the molar ratio of the other alkali metal compound to the sodium hypophosphite is preferably not more than 0.5, and more preferably not more than 0.1, and may be not more than 0.01, or not more than 0.001.

The disclosures of JP 2015-098669 A and WO 2012/140785, the contents of which are incorporated herein, can be referenced for details on other polymerization conditions.

The disclosures of WO 2017/090556 and WO 2012/140785, the contents of which are incorporated herein, can be referenced for details regarding the production of the polyamide resin of the present application.

Molded Article

In the present invention, a molded article formed from a composition containing the polyamide resin of the present invention is disclosed. The composition containing the polyamide resin may be formed from only the polyamide resin of the present invention, or may include other components. The composition containing the polyamide resin may contain one or more types of polyamide resins of the present invention, and may include other components.

The production method of a molded article obtained using the resin of the present invention is not particularly limited, and a molding method commonly used for thermoplastic resins, e.g., a molding method such as injection molding, hollow molding, extrusion molding, and press molding, can be applied.

As other components, a polyamide resin besides the polyamide resin of the present invention; a thermoplastic resin besides the polyamide resin; and additives, such as lubricants, fillers, matting agents, heat resistant stabilizers, weather resistant stabilizers, ultraviolet absorbents, plasticizers, flame retardants, antistatic agents, color inhibitors, and anti-gelling agents can be added as necessary. One of these additives, or two or more thereof may be used.

Specific examples of other polyamide resins include polyamide 6, polyamide 66, polyamide 46, polyamide 6/66 (copolymer formed from a polyamide 6 component and a polyamide 66 component), polyamide 610, polyamide 612, polyamide 11, polyamide 12, MXD6 [poly(m-xylylene adipamide)], MPXD6 [poly(m-, p-xylylene adipamide)], MXD10 [poly(m-xylylene sebacamide)], MPXD10 [poly(m-, p-xylylene sebacamide)], PXD10 [poly(p-xylylene sebacamide)], polyamide 61, polyamide 6T, polyamide 91, polyamide 9T, polyamide 10T, polyamide 6I/6T, and polyamide 9I/9T. One of these other polyamide resins, or two or more thereof may be used.

Examples of thermoplastic resins other than polyamide resins include polyester resins, such as polyethylene terephthalate, polybutylene terephthalate, polyethylene naphthalate, and polybutylene naphthalate. One of these thermoplastic resins other than polyamide resins, or two or more thereof may be used.

Examples of molded articles formed by molding a composition containing the polyamide resin include single layer films (including single layer sheets), multilayer films (including multilayer sheets), fibers, yarns, monofilaments, multifilaments, ropes, tubes, hoses, various molded materials, containers, various parts, finished products, and housings. Furthermore, the molded article (in particular, a film, a monofilament, and a multifilament) may be stretched. The molded article may be a thin-walled molded article, a hollow molded article, or the like. Among these, in the present invention, the molded article is preferably a thin-walled molded article (film product) because the oxygen barrier property, low YI, and effect of suppressing fish eyes in the present invention become remarkable. From this perspective, the thickness of the thin-walled molded article is preferably less than or equal to 200 $\mu$m, more preferably less than or equal to 100 $\mu$m, and even more preferably less than or equal to 60 $\mu$m. Film products can be preferably used in wraps, shrink films, or packaging containers such as pouches of various shapes, container lids, bottles, cups, trays, and tubes.

Examples of molded article application field include components for transportation equipment such as automobiles, general mechanical parts, precision machinery parts, electronic and electrical equipment components, OA device parts, building materials and residential related components, medical devices, leisure sporting equipment, playground equipment, medical products, articles for daily use such as food packaging films, paint and oil containers, and defense and aerospace products.

Examples

The present invention will be described in greater detail below through examples. The following materials, usage amounts, proportions, processing details, processing procedures, and the like described in the examples may be changed, as appropriate, as long as there is no deviation from the spirit of the present invention. Therefore, the scope of the present invention is not limited to the specific examples described below.

Yellowness Index (YI)

Pellets of the polyamide resins of the examples and comparative examples described below were dried, and the dried polyamide resin pellets were injection molded using an injection molding machine (SE130DU-HP, available from Sumitomo Heavy Industries, Ltd.) at a molding temperature of 270°C and a mold temperature of 90°C to produce respective plate shaped molded articles having a thickness of 2 mm.

The yellowness index of each molded article having a thickness of 2 mm was measured. The yellowness index was measured in accordance with JIS K7373.

A color/turbidity measuring instrument (product name: COH-400A, available from Nippon Denshoku Industries Co., Ltd.) was used as the measuring device.

Transparency After Water Immersion

Next, each molded article having a thickness of 2 mm was immersed for 24 hours in water at 23°C, and the haze was then measured. The haze was measured in accordance with JIS K-7105.

A color/turbidity measuring instrument (product name: COH-400A, available from Nippon Denshoku Industries Co., Ltd.) was used as the measuring device. Smaller haze values (unit: %) indicate higher transparency.

Oxygen Transmission Coefficient

The dried polyamide resin pellets were melt-extruded at 260°C using a single screw extruder with a T-die (PTM-30, available from PLABOR Research Laboratory of Plastics Technology Co., Ltd.) to produce a 60 μm thick film. The oxygen transmission rate (OTR) of the obtained film was measured using an isobaric method in an atmosphere at 23°C and 60% relative humidity (RH), and the oxygen transmission coefficient (OTC) was calculated from the measurement results. The pressure of the oxygen atmosphere was set to 1 atm, and the measurement time was 24 hours. Note that the oxygen transmission coefficient (OTC) is calculated as follows.

$$\text{OTC} = \text{OTR x Measured Film Thickness } (\mu\text{m}) / 1000$$

The oxygen transmission rate (OTR) was measured using an oxygen transmission rate measuring device (product name: "OX-TRAN (trade name) 2/21", available from MOCON Inc.).

Number of Fish Eyes (FE)

The dried polyamide resin pellets were fed into a single screw extruder with a T-die, and melt-extruded at 260°C, and the take-up rate was adjusted to form a film having a width of 150 mm and a thickness of 60 μm.

This film having a thickness of 60 μm was passed between a light source and a camera of a fish eye inspection device, and while the film was wound by a winder, the number of fish eyes (circle-equivalent diameter of 200 μm or more) in a film having a width of 100 mm and a length of 10 m was counted, and the number of fish eyes per 1 $m^2$ was measured. The "circle-equivalent diameter" refers to the diameter when converted to a circle with the same surface area.

As the single screw extruder with a T-die, PTM-30 available from PLABOR Research Laboratory of Plastics Technology Co., Ltd. was used. As the fish eye inspection device, GX-70W, available from Mamiya-OP Co., Ltd. was used.

Measurement of Number Average Molecular Weight (Mn)

In a mixed solvent of phenol/ethanol of 4/1 (volume ratio), 0.3 g of the polyamide resin was added and stirred at 25°C until completely dissolved. Next, under agitation, the inner wall of a container was rinsed with 5 mL of methanol, and neutralization titration was performed with a 0.01 mol/L aqueous hydrochloric acid solution to determine the terminal amino group concentration [$NH_2$]. Furthermore, 0.3 g of the polyamide resin was added to benzyl alcohol and stirred at 170°C in a nitrogen stream until completely dissolved. Next, the mixture was cooled to 80°C or lower in a nitrogen stream, after which under agitation, the inner wall of the container was rinsed with 10 mL of methanol, and neutralization titration was performed with a 0.01 mol/L aqueous sodium hydroxide solution to determine the terminal carboxyl group concentration [COOH]. The number average molecular weight was determined from the measured terminal amino group concentration [$NH_2$] (unit: μeq/g) and the measured terminal carboxyl group concentration [COOH] (unit: μeq/g) by the following equation:

$$\text{Number average molecular weight (Mn)} = 2000000/([\text{COOH}] + [\text{NH}_2])$$

Method of Measuring the Phosphorus Atom Concentration and the Sodium Atom Concentration

First, 0.2 g of the polyamide resin and 8 mL of a 35 mass% nitric acid aqueous solution were put into a container, and then subjected to microwave decomposition at an internal temperature of 230°C for 30 minutes. The decomposed liquid was adjusted to a constant volume using ultrapure water, and was used as an Inductively Coupled Plasma (ICP) measurement solution.

The container made of modified PTFE (TFM) was used. The microwave decomposition was carried out using ETHOS One available from Milestone General KK. The ICP measurements were conducted using ICPE-9000 available from Shimadzu Corporation.

Example 1

The polyamide resin shown in Table 1 was synthesized according to the following method, and pellets thereof were obtained.

In a reaction container with a stirrer, a partial condenser, a total condenser, a thermometer, a dropping funnel, a nitrogen gas introduction tube, and a strand die, weighed raw materials including 6000 g (41.06 mol) of adipic acid, 6821 g (41.06 mol) of isophthalic acid, and 7.2 g of sodium hypophosphite monohydrate ($NaH_2PO_2 \cdot H_2O$) (100 ppm by mass in terms of the phosphorus atom concentration in the polyamide resin) were blended, and then sufficiently purged with nitrogen, after which the reaction container was filled with nitrogen to an internal pressure of 0.4 MPa, and the inside of the system was heated to 190°C while stirring under a small nitrogen gas flow.

To this, 11184 g (82.11 mol) of meta-xylylenediamine was added dropwise under stirring, and the temperature inside the system was continuously increased while removing condensed water that was produced, to outside of the system. After dropwise addition of the meta-xylylenediamine was completed, the internal temperature was increased, and when the temperature reached 255°C, the pressure inside the reaction container was reduced. The internal temperature was then further increased, and a melt polycondensation reaction was continued for 10 minutes at 260°C. Subsequently, the inside of the system was pressurized with nitrogen, the obtained polymer was removed from the strand die and pelletized, and approximately 21 kg of polyamide resin (MXD6I-1) was thereby obtained. The obtained polyamide resin was found to have a crystal melting enthalpy ΔHm of substantially 0 J/g in the process of increasing the temperature, and was amorphous. The concentration of phosphorus atoms, and the ratio of the molar amounts of phosphorus atoms and sodium atoms contained in the obtained polyamide resin (polymer) are shown in Table 1. Furthermore, the number average molecular weight of the polyamide resin, the YI, the haze after immersion in water, the number of FE, and the OTC were also measured according to the measurement methods described above. These values are shown in Table 1.

Comparative Example 1

A polyamide resin (MXD6I-2) was obtained in the same manner as in Example 1 with the exception that the addition amount of sodium hypophosphite monohydrate was 2.16 g. The concentration of phosphorus atoms in the obtained polyamide resin, the ratio of the molar amounts of phosphorus atoms to the sodium atoms, the molecular weight, the YI, the number of FE, and OTR value are shown in Table 1.

Comparative Example 2

A polyamide resin (MXD6I-3) was obtained in the same manner as in Example 1 with the exception that the addition amount of sodium hypophosphite monohydrate was 12.6 g. The concentration of phosphorus atoms in the obtained polyamide resin, the ratio of the molar amounts of phosphorus atoms to the sodium atoms, the molecular weight, the YI, the number of FE, and OTR value are shown in Table 1.

[Table 1]

| | | Example 1 | Comparative Example 1 | Comparative Example 2 |
|---|---|---|---|---|
| Polyamide Resin | Type | MXD6I-1 | MXD6I-2 | MXD6I-3 |
| | Phosphate | $NaH_2PO_2$ | $NaH_2PO_2$ | $NaH_2PO_2$ |
| | P concentration | 100 ppm | 30 ppm | 175 ppm |
| | P: Na (mol) | 1:1 | 1:1 | 1:1 |
| Mn | | 13400 | 11600 | 10900 |

(continued)

| | Example 1 | Comparative Example 1 | Comparative Example 2 |
|---|---|---|---|
| YI (2 mm thick plate) | 3.57 | 6.82 | 3.70 |
| Haze (%) after immersion in 23°C water for 24 h | 2.4 | 2.9 | 14.1 |
| Number of Fe (quantity/$m^2$) | 422 | 396 | 625 |
| OTC at 23 °C and 60% RH (cc·mm/$m^2$·atm·day) | 0.08 | 0.08 | 0.08 |
| P concentration: Concentration of phosphorus atoms in the obtained polyamide resin (polymer) based on mass<br>P: Na: Ratio of the molar amounts of phosphorus atoms to sodium atoms in the obtained polyamide resin (polymer)<br>Mn: Number average molecular weight | | | |

As is clear from the above results, it was found that by regulating the concentration of phosphorus atoms and the ratio of phosphorus atoms to sodium atoms in the polyamide resin to specific ranges, a high oxygen barrier property can be imparted, the yellowness index is low, and the occurrence of fish eyes can be effectively suppressed.

## Claims

1. A polyamide resin comprising a structural unit derived from a diamine and a structural unit derived from a dicarboxylic acid,
of the structural unit derived from a diamine, 70 mol% or more being derived from meta-xylylenediamine, and of the structural unit derived from a dicarboxylic acid, from 30 to 70 mol% being derived from an $\alpha,\omega$-linear aliphatic dicarboxylic acid having from 4 to 20 carbons, and from 70 to 30 mol% being derived from isophthalic acid (provided that a total of the structural unit derived from a dicarboxylic acid does not exceed 100 mol%), and
the polyamide resin including a phosphorus atom at a proportion from 50 to 150 ppm by mass, and a sodium atom at a proportion such that a molar ratio of the phosphorus atom to the sodium atom being from 1:1 to 1:2.

2. The polyamide resin according to claim 1, wherein the phosphorus atom is derived from sodium hypophosphite.

3. The polyamide resin according to claim 1 or 2, wherein the $\alpha,\omega$-linear aliphatic dicarboxylic acid having from 4 to 20 carbons includes adipic acid.

4. The polyamide resin according to any one of claims 1 to 3, which has an oxygen transmission coefficient of 0.2 cc·mm/$m^2$·day·atm or less at a condition of 23°C and 60% relative humidity.

5. The polyamide resin according to any one of claims 1 to 4, wherein a molded article formed by molding into a thickness of 2 mm has a yellowness index (YI) of 10.0 or less.

6. A polyamide resin comprising a structural unit derived from a diamine and a structural unit derived from a dicarboxylic acid,
of the structural unit derived from a diamine, 70 mol% or more being derived from meta-xylylenediamine, of the structural unit derived from a dicarboxylic acid, from 30 to 70 mol% being derived from an $\alpha,\omega$-linear aliphatic dicarboxylic acid having from 4 to 20 carbons, and from 70 to 30 mol% being derived from isophthalic acid (provided that a total of the structural unit derived from a dicarboxylic acid does not exceed 100 mol%),
a number of fish eyes being 600 or less, and
a molded article formed by molding into a thickness of 2 mm having a yellowness index (YI) of 6.5 or less, wherein the number of fish eyes described herein refers to a number of microscopic masses having a circle-equivalent diameter of 200 $\mu$m or more contained per 1 $m^2$ of a film when the polyamide resin is formed into a 60 $\mu$m thick film.

7. A molded article formed from a composition comprising the polyamide resin described in any one of claims 1 to 6.

8. A method for producing a polyamide resin described in any one of claims 1 to 6, the method comprising subjecting a diamine and a dicarboxylic acid to polycondensation in the presence of a sodium-containing catalyst,
70 mol% or more of the diamine being meta-xylylenediamine, and
of the dicarboxylic acid, from 30 to 70 mol% being an $\alpha,\omega$-linear aliphatic dicarboxylic acid having from 4 to 20 carbons, and from 70 to 30 mol% being isophthalic acid (provided that a total of the dicarboxylic acid does not exceed 100 mol%).

**9.** A method for producing a polyamide resin comprising subjecting a diamine and a dicarboxylic acid to polycondensation in the presence of sodium hypophosphite,
70 mol% or more of the diamine being meta-xylylenediamine,
of the dicarboxylic acid, from 30 to 70 mol% being an $\alpha,\omega$-linear aliphatic dicarboxylic acid having from 4 to 20 carbons, and from 70 to 30 mol% being isophthalic acid (provided that a total of the dicarboxylic acid does not exceed 100 mol%), and
the polyamide resin including a phosphorus atom at a proportion from 50 to 150 ppm by mass.

**INTERNATIONAL SEARCH REPORT**

International application No.
PCT/JP2019/019936

A. CLASSIFICATION OF SUBJECT MATTER
Int.Cl. C08G69/26(2006.01)i

According to International Patent Classification (IPC) or to both national classification and IPC

B. FIELDS SEARCHED

Minimum documentation searched (classification system followed by classification symbols)
Int.Cl. C08G69/26

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | WO 2018/070194 A1 (MITSUBISHI GAS CHEMICAL CO., INC.) 19 April 2018, claims 1, 3-5, paragraphs [0033], [0089], production example 1 (Family: none) | 1-9 |
| A | JP 2015-147318 A (MITSUBISHI GAS CHEMICAL CO., INC.) 20 August 2015, claims 1, 4, paragraph [0039], (Family: none) | 1-9 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 July 2019 (12.07.2019) | 23 July 2019 (23.07.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017090556 A
- JP 2015098669 A
- WO 2012140785 A